# DEMANDE DE BREVET EUROPEEN

(11) **EP 3 428 133 A1**
(43) Date de publication de la demande: **16.01.2019**
(21) Numéro de dépôt: 18182970.6
(22) Date de dépôt: 21.05.2007
(51) Int. Cl.: C03B 29/08, C03B 35/20, C03B 23/025

(54) **CHAUFFAGE D'OBJETS DANS UNE LIGNE DE FOUR**

(30) Priorité: 26.05.2006 DE 102006024484
(62) Demande divisionnaire de: 07766080.1
(71) Demandeur: Saint-Gobain Glass France, 92400 Courbevoie (FR)
(72) Inventeur: BALDUIN, Michael, 52447 ALSDORF (DE); DUNKMANN, Benno, 4700 EUPEN (BE); LABROT, Michael, 52072 AACHEN (DE); OLLFISCH, Karl-Josef, 52159 ROETGEN (DE)
(74) Mandataire: Saint-Gobain Recherche

(57) **Abrégé**

L'invention concerne un dispositif (100) de chauffage d'objets, notamment de chauffage et/ou de bombage d'une ou plusieurs vitres (7, 11) posées les unes sur les autres en se recouvrant mutuellement, qui présente une ligne de four d'un seul tenant, plusieurs supports, notamment des moules de transport (6, 10) qui assurent le transport et/ou le bombage des objets (7, 11), les objets (7, 11) étant posées sur les supports (6, 10) disposés sur des chariots de transport (14), un dispositif d'entraînement qui fait avancer les chariots de transport (14) dans la ligne de four et plusieurs éléments chauffants (4) prévus au-dessus des objets (7, 11) dans la ligne de four. Selon l'invention, le dispositif (100) est caractérisé en ce que les éléments chauffants (4) sont disposés globalement au-dessus de la totalité de la ligne de four et en ce que les éléments chauffants (4) peuvent être commandés et régulés de manière à former des zones de chauffage adaptées aux dimensions des objets (7, 11). L'invention concerne également un procédé qui recourt au dispositif selon l'invention.

## Description

L'invention concerne un dispositif et un procédé de chauffage d'objets et notamment de chauffage et/ou de bombage d'une ou de plusieurs vitres posées les unes au-dessus des autres.

Le brevet européen EP0736498B1 divulgue un procédé de transport de chariots porte-moule dans un four de bombage de vitres. Le four de bombage contient des chambres de préchauffage et plusieurs chambres de bombage disposées en aval des premières, ainsi que des chambres de refroidissement disposées en dessous des chambres de préchauffage et des chambres de bombage. Les chariots porte-moule sont ainsi amenés les uns derrière les autres sur une piste supérieure et transférés sur une piste inférieure après que les vitres ont été sous l'effet de la gravité. Le transport des chariots porte-moule s'effectue par à-coups, c'est-à-dire que les chariots restent immobiles dans différentes chambres pendant un certain laps de temps et sont ensuite déplacés simultanément à la manière d'un train. A l'intérieur du four de bombage le transport des chariots s'effectue en va-et-vient dans des sens de transport opposés. Les chambres individuelles sont séparées les unes des autres de la façon représentée dans la figure 1 (état de la technique selon EP0736498B1) et la figure 2, et les chariots porte-moule sont de plus dotés de parois frontales qui les séparent de la chambre suivante. Selon les enseignements du EP0736498B1, après leur transfert sur la piste inférieure, les chariots porte-moule sont transférés directement en une position située en dessous de la première chambre de bombage ou directement en dessous de la chambre de préchauffage final, tandis que les autres chariots porte-moule restent stationnaires.

La demande de brevet européen EP1236692A2 divulgue un dispositif de chauffage, de bombage et de refroidissement de vitres dans lequel le dispositif comprend un étage supérieur et un étage inférieur ainsi que des chariots de bombage successifs. L'étage supérieur du dispositif est constitué de plusieurs chambres de chauffage et dans la direction du transport des chariots de bombage, la dernière est une chambre de bombage. L'étage inférieur est constitué d'une série de chambres de refroidissement disposées en dessous des chambres de bombage. Les chariots de bombage ont une structure ouverte dans le haut ou, d'une autre manière, un fond bon conducteur de la chaleur. Une chambre de pré-bombage est disposée en amont de la chambre de bombage. Sur le plafond des chambres de chauffage et de bombage sont disposés des éléments chauffants à résistance qui chauffent les vitres, les chambres individuelles étant séparées les unes des autres dans leur plafond par des saillies de type en mur. Dans ces zones, on ne trouve pas d'éléments chauffants. Selon l'invention, les chambres de pré-bombage et au moins la dernière chambre de chauffage sont dotées sur leur fond d'éléments chauffants qui chauffent les vitres par le bas à travers le fond des chariots de bombage.

L'invention concerne les dispositifs (dispositifs 1 à 12) et procédés (procédés 1 à 6) ci-dessous :
Dispositif 1 : Dispositif (100) de chauffage d'objets, comprenant une ligne de four, plusieurs supports (6, 10) qui assurent le transport des objets (7, 11), les objets (7, 11) étant posées sur les supports (6, 10) disposés sur des chariots de transport (14), un dispositif d'entraînement qui fait avancer les chariots de transport (14) dans la ligne de four et plusieurs éléments chauffants (4) prévus au-dessus des objets (7, 11) dans la ligne de four, caractérisé en ce que les éléments chauffants (4) sont disposés globalement au-dessus de la totalité de la ligne de four et en ce que les éléments chauffants (4) peuvent être commandés et régulés de manière à former des zones de chauffage adaptées aux dimensions des objets (7,11).
Dispositif 2 : Dispositif selon le dispositif 1, caractérisé en ce que la ligne de four est divisée en plusieurs chambres (12.1, 12.2, 12.3) qui présentent des frontières de chambre (13.1, 13.2, 13.3), en ce que les éléments chauffants (4) sont disposés globalement au-dessus des frontières (13.1, 13.2, 13.3) entre les chambres et en ce que les zones de chauffage adaptées aux dimensions des objets (7, 11) et les chambres (12.1, 12.2, 12.3) sont indépendantes les unes des autres.
Dispositif 3 : Dispositif selon le dispositif 1 ou 2, caractérisé en ce que la longueur des chariots de transport (14) dans la direction du transport est adaptée à la taille des plus petits supports (10) utilisables, de telle sorte que les supports (6) destinés à des objets (7) plus grand débordent au-delà des chariots de transport (14) dans la direction du transport.
Dispositif 4 : Dispositif selon l'un des dispositifs 1 à 3, caractérisé en ce que les supports sont des moules de transport (6, 10) en forme de cadre.
Dispositif 5 : Dispositif selon l'un des objets 1 à 4, caractérisé en ce que les différents chariots de transport (14) sont tous dotés de leur propre dispositif d'entraînement.
Dispositif 6 : Dispositif selon l'un des dispositifs 1 à 4, caractérisé en ce que les chariots de transport (14) peuvent être déplacés dans le parcours de transport sur un dispositif de transport, par exemple une chaîne, un lit de rouleaux, des galets ou une bande.
Dispositif 7 : Dispositif selon selon l'un des dispositifs 1 à 6, caractérisé en ce que des parcours d'accélération et/ou de ralentissement sont prévus dans les zones de transition entre les zones de chauffage et/ou de refroidissement.
Dispositif 8 : Dispositif selon selon l'un des dispositifs 1 à 4, caractérisé en ce que les chariots de transport (14) ou les supports (6, 10) sont contigus les uns aux autres en formant un train de chariots continu, de telle sorte que lorsqu'un premier chariot de transport est poussé à l'entrée du four ou lorsque le dernier chariot de transport est extrait à la sortie du four, l'ensemble du train de chariots peut être déplacé dans la ligne de four.
Dispositif 9 : Dispositif selon selon l'un des dispositifs 1 à 8, caractérisé en ce que les chariots de transport (14) peuvent être déplacés pas à pas et donc de manière discontinue, avec des temps d'arrêt entre des phases de déplacement dans la ligne de four.
Dispositif 10 : Dispositif selon selon l'un des dispositifs 1 à 8, caractérisé en ce que les chariots de transport (14) peuvent être déplacés dans la ligne de four en continu, et donc sans phase d'arrêt, et en ce que pour chaque objet (7, 11), une zone de chauffage peut être déplacée de façon contrôlée vers l'avant en correspondance à l'avancement des objets.
Dispositif 11 : Dispositif selon selon l'un des dispositifs 1 à 10, caractérisé en ce que les éléments chauffants supplémentaires sont disposés au-dessus et/ou à côté des objets (7, 11).
Dispositif 12 : Dispositif selon selon l'un des dispositifs 1 à 11, caractérisé en ce que les objets sont des vitres posées à l'horizontales sur les supports (6, 10) qui sont des moules de transport, chaque moule de transport portant une ou plusieurs vitres (7,11) posées les unes sur les autres en se recouvrant mutuellement.
Procédé 1 : Procédé de chauffage d'au moins un objet (7, 11) dans un four doté d'une ligne de four d'un seul tenant ou divisée en chambres (12.1, 12.2, 12.3) et doté de plusieurs éléments chauffants (4) disposés au-dessus et/ou en dessous et/ou à côté des objets (7, 11), lequel procédé comporte les étapes qui consistent à :
   - placer les objets (7, 11) sur un support (6, 10) disposé sur un chariot de transport (14),
   - transporter les supports (6, 10) disposés sur les chariots de transport (14) et chargés d'objets (7, 11) à travers la ligne de four,
   - commander et réguler les éléments chauffants (4) de telle sorte qu'ils forment, indépendamment des frontières entre les chambres (13.1, 13.2, 13.3) du parcours de transport des zones de chauffage des objets (7, 11) qui correspondent à la taille et à la position de ces derniers dans le parcours de transport.
Procédé 2 : Procédé selon le procédé 1, caractérisé en ce que chaque objet est au moins une vitre, chaque support est un moule de transport, les vitres (7, 11) étant chauffées jusqu'à leur température de bombage pendant leur transport dans la ligne de four, et sont bombées sur les moules de transport (6, 10) dans leur forme souhaitée et sont ensuite retirées des moules de transport (6, 10).
Procédé 3 : Procédé selon le procédé 1, caractérisé en ce que chaque objet est au moins une vitre, chaque support est un moule de transport, les vitres (7, 11) étant chauffées jusqu'à leur température de bombage pendant leur transport dans la ligne de four, les vitres (7, 11) étant prébombées sur les moules de transport (6, 10) et sont transférées à la fin de la ligne de four à un autre dispositif de bombage qui assure leur bombage final.
Procédé 4 : Procédé selon le procédé 2 ou 3, caractérisé en ce que chaque objet est au moins deux vitres (7, 11) placées l'une au-dessus de l'autre en se recouvrant et sont chauffées et/ou (pré)bombées simultanément.
Procédé 5 : Procédé selon l'un des procédés 1 à 4, caractérisé en ce que les objets (7, 11) sont transportées pas à pas dans le parcours de transport.
Procédé 6 : Procédé selon l'un des procédés 1 à 5, caractérisé en ce que les objets (7, 11) sont transportés dans le parcours de transport en continu et à vitesse constante, une zone de chauffage se déplaçant de manière contrôlée vers l'avant pour chaque objet (7, 11) en correspondance à l'avancement de ce dernier.

Le problème à la base de l'invention est de proposer un dispositif amélioré et plus souple, et un autre procédé de chauffage d'objets, notamment de bombage de vitres.

Selon l'invention, ce problème est résolu avec le dispositif 1 et avec le procédé 1. Les dispositifs 2 à 12 et les procédés 2 à 6 donnent des modes de réalisation avantageux de l'invention.

Dans la description qui suit, il est possible que des caractéristiques du dispositif soient mélangées avec des caractéristiques du procédé, parce que certaines parties du dispositif ne peuvent être expliquées qu'en référence aux étapes du procédé.

Dans ce qui suit, on décrit surtout l'invention appliquée au chauffage et au bombage de vitres, mais il est entendu que le principe du chauffage selon l'invention est applicable au chauffage d'autres objets, comme par exemple en céramique. Ainsi, notamment, les objets circulant dans le dispositif selon l'invention sont des vitres posées à l'horizontales sur supports qui sont des moules de transport, chaque moule de transport portant une ou plusieurs vitres posées les unes sur les autres en se recouvrant mutuellement.

Le dispositif selon l'invention, pour le chauffage d'objets (notamment le chauffage et/ou le bombage d'une ou plusieurs vitres situées les unes au dessus des autres en se recouvrant) comprend une ligne de four. La ligne de four peut être constituée d'un seul composant et donc être réalisée d'un seul tenant, ou être divisée en plusieurs chambres. Le dernier mode de construction est habituellement utilisé, car il présente des avantages en termes de construction. En effet, des composants plus petits sont plus faciles à manipuler et d'autre part, la division de la ligne de four en chambres permet de construire le four à partir de modules plus ou moins identiques. Dans le cas du chauffage de vitres, la ligne de four est habituellement divisée fonctionnellement en zones de chauffage et zones de pré-bombage et de bombage final.

Dans le cadre d'un procédé de bombage, les vitres sont chauffées à leur température de ramollissement par des chauffages à résistance électrique connus, éventuellement sous l'assistance d'une convection. Bien entendu, d'autres modes de chauffage des vitres sont possibles, par exemple un chauffage au gaz. Un parcours de refroidissement qui, ainsi qu'on l'a déjà indiqué dans l'état de la technique décrit au début, peut être situé en dessous des zones de chauffage et de bombage mais qui peut également y être raccordé dans leur plan, suit la zone de bombage final.

Les supports des objets (notamment des moules de transport) placés sur leur chariot de transport peuvent être déplacés en train à travers l'ensemble du dispositif et du parcours de refroidissement final, mais un transport sur des trains de chariots séparés pour le chauffage (et le cas échéant le pré-bombage), d'une part, et le refroidissement des objets (notamment des vitres) et éventuellement leur bombage final préalable, de la manière décrite dans la demande de brevet WO 2006/075117 de la demanderesse, est également possible. Le pré-bombage des vitres s'effectue sous la forme d'un bombage sous l'action de la gravité des vitres chauffées à la température de bombage et posées sur leur moule de transport. Le bombage final peut s'effectuer sous l'action de la gravité, mais l'on connaît également des procédés de bombage par compression (document EP1391432A1) et aspiration ou une combinaison des deux (document WO02/64519A1).

Selon l'invention, les éléments chauffants de la ligne de four réalisée à la manière d'un four tunnel sont commandés en fonction de la taille et de la position des objets (notamment des vitres) et donc des support des objet (notamment des moules de transport). Les zones de chauffage ne sont donc plus liées à des zones ou chambres de chauffage définies et imposées lors de la construction du dispositif; au contraire, les zones de chauffage sont définies pour chaque taille d'objet (notamment de vitre) et sont donc libérées des prescriptions qui régissent la division structurelle de la ligne de four. La ligne de four du dispositif selon l'invention n'est en général pas réalisée d'un seul tenant mais dans le mode de construction habituel, en différentes chambres raccordées en série les unes aux autres. Au contraire des lignes de four de l'état de la technique, les zones de chauffage ne sont pas reliées à des chambres prédéterminées du dispositif. Les éléments chauffants proprement dits doivent évidemment présenter des dimensions relativement petites et être disposés à proximité étroite les uns des autres pour pouvoir former toutes les zones partielles suffisamment régulables pour la taille des objets (notamment des vitres) à fabriquer, de telle sorte que les objets puissent être chauffés de différentes manières.

Les éléments chauffants sont avantageusement disposés sans interruption le long du plafond et/ou du fond, et éventuellement aussi des côtés de la ligne de four. Au cas où la ligne de four est constituée de chambres distinctes qui présentent à leurs extrémités des saillies ou des retraits de type en mur ou en corniche, ces zones sont également occupées par des éléments chauffants de petite taille. Ce n'est qu'ainsi que la totalité de la longueur de la ligne de four peut être occupée par des zones de chauffage adaptées à la taille des objets (notamment des vitres) grâce à une division obtenue par régulation. Au cas où les frontières entre les chambres ne présentent pas de saillies ou de retraits, les éléments chauffants peuvent évidemment être également posés sans interruption le long du parcours de transport des objets (notamment des vitres).

Les objets sont posés sur des supports, chaque support étant placé sur un chariot de transport. Les chariots de transport, et donc également les supports entraînés par les chariots de transport, défilent les uns derrière les autres à travers le dispositif selon l'invention. Chaque support porte un objet, étant entendu qu'un objet peut être une vitre ou plusieurs vitres juxtaposées les unes sur les autres. Le support peut notamment être un moule de transport, notamment d'au moins une vitre. Dans ce cas, le moule de transport a aussi la fonction de donner sa forme à l'objet qu'il porte, comme une ou plusieurs vitres posées les unes sur les autres. En passant dans le dispositif selon l'invention, la ou les vitres sont chauffées à leur température de ramollissement et s'effondrent sous l'effet de leur propre poids pour prendre la forme du moule de transport.

Dans un développement avantageux de l'invention, les chariots de transport sont adaptés essentiellement à la taille des plus petits objets (notamment des vitres) à chauffer ou à bomber et donc à leur support (notamment moule de transport). Comme on utilise un seul type de chariot de transport pour toutes les tailles d'objets (notamment de verre), cela a pour conséquence que les supports (notamment moules de transport) des objets plus grands débordent au-delà des chariots de transport.

Dans les dispositifs de bombage de l'état de la technique, la longueur des chariots de transport est adaptée à la longueur des chambres du four et donc à la plus grande vitre qui doit subir l'opération de bombage. Le dispositif de l'état de la technique est donc toujours équipé du même nombre de chariots de transport et donc de vitres, quelle que soit la taille des vitres. Chaque chambre ne contient jamais qu'une seule vitre, parce que les vitres ne peuvent pas être chauffées dans la zone de la frontière d'une chambre. Si l'on bombe des vitres relativement petites, une grande partie de la ligne de four reste inutilisée. Cela signifie que la capacité du four et donc le nombre des vitres qui traversent le four par unité de temps, sont en pratique constants pour toutes les tailles de vitres, alors qu'il existe suffisamment de place dans la ligne de four pour un plus grand nombre de vitres. Il en va de même évidemment aussi pour le parcours de refroidissement qui suit habituellement la ligne de four.

En revanche, par une occupation plus dense par des objets (notamment des vitres), indépendante des frontières des chambres, le dispositif selon l'invention permet d'obtenir une meilleure utilisation à la fois de la ligne de four et du parcours de refroidissement qui s'y raccorde normalement. La ligne de four et le parcours de refroidissement peuvent donc être réalisés à une plus courte longueur qu'habituellement, ce qui permet de réduire également l'encombrement et donc le coût d'investissement du dispositif. Comme dans le dispositif de chauffage (notamment de bombage) selon l'invention, la densité en objets (notamment des vitres) est plus élevée, il faudra dans la plupart des cas une plus grande puissance de chauffage ou de refroidissement par unité de longueur que dans les dispositifs de bombage de l'état de la technique. La puissance totale nécessaire ne change en général évidemment pas.

Les moules de transport sont de préférence configurés en forme d'encadrement, c'est-à-dire que les objets (notamment des vitres) sont portées par le moule de transport uniquement dans une certaine zone qui longe leur périphérie. Indiquons à ce propos que dans le dispositif selon l'invention, on peut évidemment utiliser des moules de transport de type approprié, par exemple des moules pleins concaves.

Tous les chariots de transport ou les supports (notamment moules de transport), au cas où ces derniers débordent des chariots de transport, peuvent être contigus l'un contre l'autre sans interruption, de sorte que seul le dernier chariot qui pénètre dans la ligne de four doit être poussé vers l'avant dans la direction du transport pour que l'ensemble du train soit déplacé de la distance sur laquelle le premier chariot est déplacé vers l'avant. On peut également imaginer de tirer le train de chariots dans la ligne de four au moyen d'une machine de traction, le dernier chariot de transport ou le dernier support (notamment moule de transport) étant extraits à la sortie de la ligne de four et de cette manière, les autres chariots de transport accouplés au dernier et situés dans la ligne de four sont déplacés vers l'avant. Il est tout aussi possible d'entraîner individuellement les chariots de transport situés dans la ligne de four. Les dispositifs d'entraînement peuvent agir de l'extérieur sur les chariots de transport, mais les différents chariots de transport peuvent également être dotés de moyens d'entraînement propres. Dans ce cas, les chariots de transport ne doivent pas être contigus les uns aux autres et le déplacement vers l'avant entraîne alors en général moins de secousses. Lorsque les chariots de transport présentent tous un entraînement propre, ils peuvent être déplacés à différentes vitesses dans différentes parties de la ligne de four et ils peuvent ainsi avoir des temps de séjour différents dans certaines zones de chauffage. Cela permet d'obtenir une courbe de chauffage très contrôlée et/ou une répartition précise de la température des vitres.

On peut également utiliser des chariots de transport sans roues, par exemple lorsqu'ils sont placés sur une bande transporteuse, un lit de rouleaux entraînés, des galets ou une chaîne de transport, et sont ainsi déplacés sur la ligne de four. Les chariots peuvent alors être contigus les uns aux autres ou être placés à distance mutuelle sur le moyen de transport.

Les chariots de transport peuvent être déplacés sur la ligne de four pas à pas, de la manière habituelle, c'est-à-dire que tous les chariots restent arrêtés pendant la durée fixe d'un pas défini et sont ensuite avancés sur la longueur d'un chariot pour ensuite s'arrêter de nouveau pendant la durée d'un pas. Un tel procédé est du type « discontinu ».

Selon l'invention, les chariots de transport peuvent cependant aussi passer dans le parcours de transport sans à-coups, et donc sans temps d'arrêt, à une vitesse régulière ou une vitesse variable. Dans ce cas, les éléments chauffants asservis et donc la zone qui présente la répartition définie nécessaire du chauffage doit évidemment s'avancer avec le moule de transport et donc avec la vitre sur la même distance. Il faut donc alors des zones de chauffage "roulantes" qui sont synchronisées par rapport au déplacement des objets (notamment des vitres).

Dans ce cas, on peut également penser à des formes mixtes de déplacement des chariots de transport, de telle sorte que dans certaines parties de la ligne de four, les chariots de transport soient déplacés pas à pas (synonymes : en discontinu, par à-coups) et en revanche, dans d'autres parties, être déplacés en continu.

D'autres détails et avantages de l'objet de l'invention donnés sans aucune intention restrictive ressortent du dessin d'exemples de réalisation d'un dispositif de chauffage et/ou de bombage d'une ou de plusieurs vitres posées les unes au-dessus des autres selon la présente invention, et de leur description donnée ci-dessous. Dans le dessin, et dans des représentations simplifiées, schématiques et non à l'échelle :
la figure 1a représente une section transversale d'un dispositif de chauffage et/ou de bombage de l'état de la technique, chargé de vitres relativement grandes,
la figure 1b représente une coupe transversale d'un dispositif de chauffage et/ou de bombage de l'état de la technique, chargé de vitres relativement petites,
la figure 2a représente une coupe transversale à travers un dispositif de chauffage et/ou de bombage selon l'invention, chargé de vitres relativement grandes,
la figure 2b représente une coupe transversale à travers un dispositif de chauffage et/ou de bombage selon l'invention, chargé de vitres relativement petites et
la figure 3 représente une coupe horizontale à travers une partie du dispositif de chauffage et/ou de bombage selon l'invention.

Dans les dessins qui suivent, les mêmes composants sont toujours dotés de la même référence numérique.

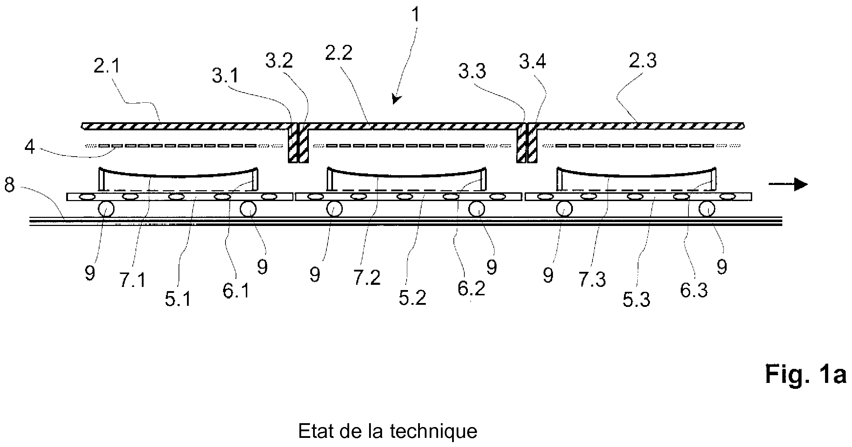

Dans la figure 1a, un dispositif 1 connu de chauffage et de bombage de vitres est constitué de plusieurs chambres dont on a n'a représenté ici que trois chambres 2.1, 2.2 et 2.3. Les chambres sont séparées les unes des autres par des saillies 3.1 à 3.4 en débord vers le bas. Les saillies 3.1 à 3.4 forment également des zones d'interruption des éléments chauffants 4 qui sinon sont répartis à la surface du plafond des chambres. Les éléments chauffants 4 sont non seulement disposés en petites cellules dans la direction du transport indiquée dans le dessin au moyen d'une flèche, mais également transversalement par rapport à la direction du transport des vitres.

Dans chacune des chambres du dispositif 1 se trouve un chariot de transport 5.1, 5.2, 5.3 doté d'un moule de transport 6.1, 6.2 et 6.3 respectif. Les moules de transport transportent des paires de vitres 7.1, 7.2 et 7.3 situées l'une au-dessus de l'autre en se recouvrant mutuellement. Le terme "moule de transport" ne restreint pas la fonction de ces moules au transport, et au contraire, les moules de transport servent en général aussi au chauffage et au refroidissement des vitres qui y sont placées.

Les chariots de transport 5.1, 5.2 et 5.3 sont dotés de roues 9 qui sont guidées au moyen de rails 8 et qui permettent un transport si possible sans secousses dans la ligne de four.

Les chariots de transport 5 sont habituellement adaptés à la longueur des chambres 2 du four et ne peuvent donc pas être remplacés par des chariots de transport adaptés à la taille des moules de transport. En cas d'adaptation, les paires de vitres se rendraient en effet dans la zone des saillies 3 non chauffées, de sorte qu'elles seraient chauffées irrégulièrement. Dans le dispositif connu, on ne peut l'éviter qu'en utilisant un nombre entier de chariots de transport pour chaque chambre de four.

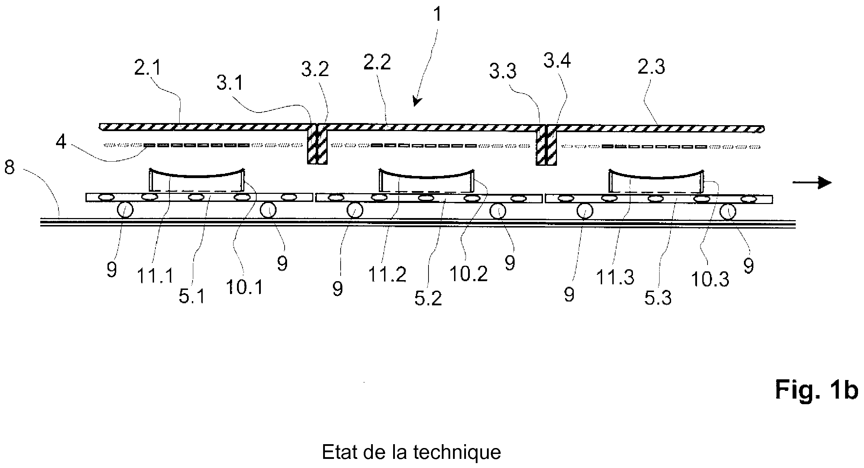

La figure 1b représente le même dispositif 1 que la figure 1a, mais qui a été équipé cette fois-ci pour le bombage de petites paires de vitres 11.1, 11.2 et 11.3. Dans ce but, les moules de transport 10.1, 10.2 et 10.3 adaptés à la taille des paires 11 de vitres ont été montés sur les chariots de transport 5.

Dans les figures 1a et 1b, on peut voir qu'en fonction de la taille des paires de vitres, seuls les éléments chauffants 4 disposés en position verticale au-dessus des vitres sont activés pour chauffer les vitres par rayonnement. Suivant la répartition du chauffage souhaitée, on peut évidemment débrancher également des éléments chauffants, par exemple dans la partie centrale des paires de vitres, si l'on doit éviter par exemple un bombage trop accusé des vitres amollies dans cette zone. Dans les dispositifs 1 de l'état de la technique, les éléments chauffants 4 ne peuvent être commandés en fonction d'un motif de chauffage qu'à l'intérieur d'une chambre 2. Dans le dessin, les éléments chauffants 4 non asservis ont été représentés en traits interrompus.

Ainsi que le montre la figure 1b, pour les vitres de la taille indiquée et la taille fixe prédéterminée des chariots de transport 5, on ne peut utiliser qu'environ la moitié de la longueur de la ligne de four pour chauffer les paires 11 de vitres. Si l'on doit traiter des vitres encore plus petites, l'espace utilisé est encore plus petit. Ainsi qu'on l'a déjà expliqué, la densité d'occupation ne peut cependant pas être augmentée sans problème, parce qu'alors les vitres passeraient en partie en dessous des saillies de plafond 3 qui ne disposent pas d'éléments chauffants. Cela aurait pour conséquence une répartition très irrégulière de la chaleur. En tout cas, il est cependant souhaitable que le nombre des vitres à l'intérieur d'une ligne de four soit aussi élevé que possible, parce que cela permet d'augmenter la production par unité de temps.

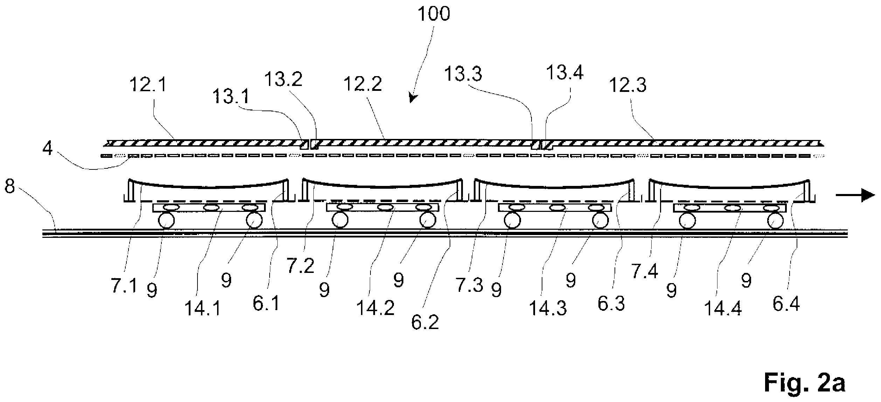

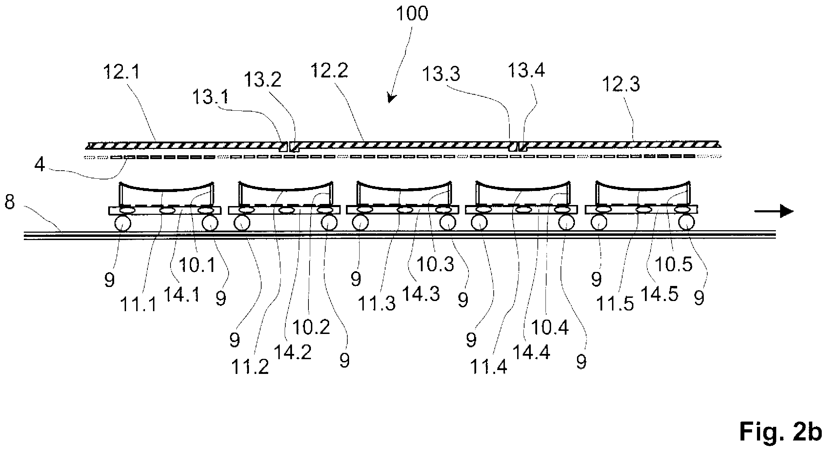

Dans le dispositif 100 selon l'invention de chauffage et/ou de bombage de vitres qui a été représenté dans les figures 2a et 2b,, les éléments chauffants 4 sont disposés sans interruption sur toute la longueur du plafond des chambres 12.1, 12.2 et 12.3. Pour maintenir constante la distance entre les éléments chauffants 4 et les paires 7.1, 7.2 et 7.3 de vitres, on a diminué la hauteur des saillies de plafond 13.1, 13.2, 13.3 et 13.4 qui débordent vers le bas. De plus, les éléments chauffants 4 ne sont plus raccordés uniquement par chambre pour définir des motifs de chauffage définis, mais on peut établir des motifs de chauffage qui débordent des limites des chambres. Le motif de chauffage adapté à une paire de vitres particulière dépend donc de la position de cette dernière dans la ligne de four. Ainsi, les chariots de transport 14 peuvent avoir une longueur indépendante des dimensions des chambres 12 du four, et leur position à l'intérieur de la ligne de four est indépendante des limites 13 entre les chambres.

Dans la figure 2b, on a représenté le traitement thermique de vitres plus petites dans le dispositif 100 selon l'invention qui a été représenté dans la figure 2a. Les trois chambres 12.1, 12.2 et 12.3 qui ont été représentées reprennent ici cinq chariots de transport 14.1 à 14.5 qui portent des moules de transport 10.1 à 10.5 respectifs sur lesquels sont placées des paires de vitres 11.1 à 11.5. Les chariots de transport du dispositif 100 selon l'invention sont adaptés à la taille des plus petits moules de transport 10 utilisés. Si l'on doit bomber des paires de vitres plus grandes, les moules de transport 6 adaptés débordent des chariots de transport 14 de la façon représentée dans la figure 2a.

Les éléments chauffants 4 sont tous commandés en fonction de la position de la paire 11 de vitres, et ce au-delà des frontières structurelles des chambres. De cette manière, on peut augmenter de un à deux tiers le débit de vitres traitées thermiquement dans les conditions de taille représentées ici.

Les représentations données dans les figures 1 et 2 ne sont que schématiques, et en particulier certains détails connus, par exemple l'entraînement des chariots de transport ou les écrans au rayonnement prévus sur les moules de transport n'y ont pas été représentés.

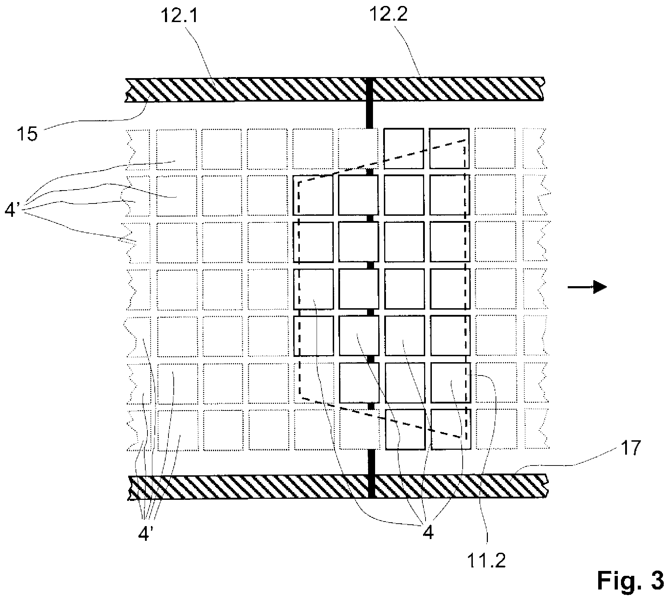

La figure 3 représente schématiquement une coupe horizontale au-dessus des éléments chauffants 4 dans la zone de la frontière entre les chambres 12.1 et 12.2 du dispositif 100 selon l'invention qui a été représenté dans la figure 2b. L'espace intérieur de la chambre est séparé latéralement de l'environnement au moyen de maçonneries 15 de chambre. La paire 11.2 de vitres a été représentée en traits interrompus. Les éléments chauffants 4 disposés au-dessus des vitres 11.2 ont été activés et les éléments 4' situés à l'extérieur de la projection des vitres 11.2 ne sont pas en service dans ce cas. Certains éléments chauffants situés à l'extérieur de la projection des vitres peuvent également être utilisés pour réguler la température dans certaines zones du four, sans influencer directement les vitres. Les éléments chauffants branchés ont été représentés par des lignes continues et les éléments chauffants débranchés par des lignes interrompues. Il est évident que les éléments chauffants raccordés peuvent également être commandés en tant que champ de chauffage lorsque les vitres se déplacent vers l'avant, lequel champ se déplaçant en même temps que la paire de vitres.

Dans le dispositif selon l'invention, les éléments chauffants ont des dimensions relativement petites, d'environ 10 cm par 10 cm, et sont ici configurés comme radiants en céramique habituels du marché. Dans ces radiants en céramique, des fils chauffants électriques sont intégrés dans la pâte de céramique. En plus de radiants en céramique, on peut également utiliser d'autres éléments chauffants appropriés, par exemple des éléments à spirales chauffantes ouvertes. Les dimensions des éléments chauffants, que ce soit des radiants en céramique ou des éléments à spirales chauffantes ouvertes, ne sont évidemment pas limitées à ladite taille, et en fonction de la forme géométrique et de la taille des vitres qu'il faut surtout chauffer dans la ligne de four spéciale, les éléments chauffants peuvent avoir des tailles quelconques adaptées à l'utilisation. De même, la combinaison d'éléments chauffants de différentes dimensions est possible et nécessaire dans de nombreux cas.

La présente demande contient l'intégralité de la demande de brevet européen 07766080.1 dont elle est une demande divisionnaire. L'invention revendiquée dans le cadre de la présente demande figure dans les revendications qui suivent.

## Revendications

1. Dispositif (100) de chauffage d'objets, comprenant une ligne de four d'un seul tenant, plusieurs supports (6, 10) qui assurent le transport des objets (7, 11), les objets (7, 11) étant posées sur les supports (6, 10) disposés sur des chariots de transport (14), un dispositif d'entraînement qui fait avancer les chariots de transport (14) dans la ligne de four et plusieurs éléments chauffants (4) prévus au-dessus des objets (7, 11) dans la ligne de four, **caractérisé en ce que** les éléments chauffants (4) sont disposés globalement au-dessus de la totalité de la ligne de four et **en ce que** les éléments chauffants (4) peuvent être commandés et régulés de manière à former des zones de chauffage adaptées aux dimensions des objets (7, 11).

2. Dispositif selon la revendication précédente, **caractérisé en ce que** la longueur des chariots de transport (14) dans la direction du transport est adaptée à la taille des plus petits supports (10) utilisables, de telle sorte que les supports (6) destinés à des objets (7) plus grand débordent au-delà des chariots de transport (14) dans la direction du transport.

3. Dispositif selon l'une des revendications précédentes, **caractérisé en ce que** les supports sont des moules de transport (6, 10) en forme de cadre.

4. Dispositif selon l'une des revendications précédentes, **caractérisé en ce que** les différents chariots de transport (14) sont tous dotés de leur propre dispositif d'entraînement.

5. Dispositif selon l'une des revendications 1 à 3, **caractérisé en ce que** les chariots de transport (14) peuvent être déplacés dans le parcours de transport sur un dispositif de transport, par exemple une chaîne, un lit de rouleaux, des galets ou une bande.

6. Dispositif selon l'une des revendications précédentes, **caractérisé en ce que** des parcours d'accélération et/ou de ralentissement sont prévus dans les zones de transition entre les zones de chauffage et/ou de refroidissement.

7. Dispositif selon l'une des revendications précédentes, **caractérisé en ce que** les chariots de transport (14) ou les supports (6, 10) sont contigus les uns aux autres en formant un train de chariots continu, de telle sorte que lorsqu'un premier chariot de transport est poussé à l'entrée du four ou lorsque le dernier chariot de transport est extrait à la sortie du four, l'ensemble du train de chariots peut être déplacé dans la ligne de four.

8. Dispositif selon l'une des revendications précédentes, **caractérisé en ce que** les chariots de transport (14) peuvent être déplacés pas à pas et donc de manière discontinue, avec des temps d'arrêt entre des phases de déplacement dans la ligne de four.

9. Dispositif selon l'une des revendications 1 à 7, **caractérisé en ce que** les chariots de transport (14) peuvent être déplacés dans la ligne de four en continu, et donc sans phase d'arrêt, et **en ce que** pour chaque objet (7, 11), une zone de chauffage peut être déplacée de façon contrôlée vers l'avant en correspondance à l'avancement des objets.

10. Dispositif selon l'une des revendications précédentes, **caractérisé en ce que** les éléments chauffants supplémentaires sont disposés au-dessus et/ou à côté des objets (7, 11).

11. Dispositif selon l'une des revendications précédentes, **caractérisé en ce que** les objets sont des vitres posées à l'horizontales sur les supports (6, 10) qui sont des moules de transport, chaque moule de transport portant une ou plusieurs vitres (7,11) posées les unes sur les autres en se recouvrant mutuellement.

12. Procédé de chauffage d'au moins un objet (7, 11) dans un four doté d'une ligne de four d'un seul tenant et doté de plusieurs éléments chauffants (4) disposés au-dessus et/ou en dessous et/ou à côté des objets (7, 11), lequel procédé comporte les étapes qui consistent à :
- placer les objets (7, 11) sur un support (6, 10) disposé sur un chariot de transport (14),
- transporter les supports (6, 10) disposés sur les chariots de transport (14) et chargés d'objets (7, 11) à travers la ligne de four,
- commander et réguler les éléments chauffants (4) de telle sorte qu'ils forment, des zones de chauffage des objets (7, 11) qui correspondent à la taille et à la position de ces derniers dans le parcours de transport.

13. Procédé selon la revendication précédente, **caractérisé en ce que** chaque objet est au moins une vitre, chaque support est un moule de transport, les vitres (7, 11) étant chauffées jusqu'à leur température de bombage pendant leur transport dans la ligne de four, et sont bombées sur les moules de transport (6, 10) dans leur forme souhaitée et sont ensuite retirées des moules de transport (6, 10).

14. Procédé selon la revendication 12, **caractérisé en ce que** chaque objet est au moins une vitre, chaque support est un moule de transport, les vitres (7, 11) étant chauffées jusqu'à leur température de bombage pendant leur transport dans la ligne de four, les vitres (7, 11) étant prébombées sur les moules de transport (6, 10) et sont transférées à la fin de la ligne de four à un autre dispositif de bombage qui assure leur bombage final.

15. Procédé selon l'une des revendications de procédé précédentes, **caractérisé en ce que** chaque objet est au moins deux vitres (7, 11) placées l'une au-dessus de l'autre en se recouvrant et sont chauffées et/ou (pré)bombées simultanément.

16. Procédé selon l'une des revendications de procédé précédentes, **caractérisé en ce que** les objets (7, 11) sont transportées pas à pas dans le parcours de transport.

17. Procédé selon l'une des revendications de procédé précédentes, **caractérisé en ce que** les objets (7, 11) sont transportés dans le parcours de transport en continu et à vitesse constante, une zone de chauffage se déplaçant de manière contrôlée vers l'avant pour chaque objet (7, 11) en correspondance à l'avancement de ce dernier.
